# DEMANDE DE BREVET EUROPEEN

(11) **EP 3 896 864 A1**
(43) Date de publication de la demande: **20.10.2021**
(21) Numéro de dépôt: 21167300.9
(22) Date de dépôt: 08.04.2021
(51) Int. Cl.: H04B 5/00, G06K 7/10, H04W 52/02

(54) **DÉTECTION D'UN DISPOSITIF NFC**

(30) Priorité: 15.04.2020 FR 2003790
(71) Demandeur: STMicroelectronics (Rousset) SAS, 13790 Rousset (FR)
(72) Inventeur: TRAMONI, Alexandre, 83330 LE BEAUSSET (FR); RIZZO, Pierre, 13530 TRETS (FR); JAUNET, Guillaume, 06130 GRASSE (FR)
(74) Mandataire: Cabinet Beaumont

(57) **Abrégé**

La présente description concerne un procédé dans lequel des seuils de détection, par un premier dispositif NFC, d'un deuxième dispositif NFC, sont ajustés (506) en fonction d'un nombre d'erreurs de détection à l'issue de plusieurs salves d'émission de champ.

## Description

### Domaine technique

La présente description concerne de façon générale les circuits électroniques et, plus particulièrement, les transpondeurs électromagnétiques ou étiquettes électroniques (tag, en anglais). La présente description s'applique en particulier aux dispositifs électroniques intégrant un circuit de communication en champ proche (Near-Field Communication - NFC, en anglais), plus communément appelés dispositifs NFC, et à la détection de la présence d'un tel dispositif dans le champ d'un autre dispositif.

### Technique antérieure

Les systèmes de communication à transpondeurs électromagnétiques sont de plus en plus fréquents, en particulier depuis le développement des technologies de communication en champ proche. Ces systèmes exploitent typiquement un champ électromagnétique radiofréquence généré par un dispositif NFC (terminal ou lecteur) pour détecter puis communiquer avec un autre dispositif NFC (carte) situé à portée.

La plupart du temps, les dispositifs NFC actuels sont alimentés par batterie. Des périodes d'utilisation de leurs fonctions et circuits sont alors généralement entrecoupées de périodes de veille. Les périodes de veille permettent en particulier d'abaisser la consommation énergétique des dispositifs NFC. On a donc intérêt à faire en sorte que les dispositifs NFC restent en veille le plus longtemps possible.

### Résumé de l'invention

Un mode de réalisation pallie tout ou partie des inconvénients des procédés et circuits connus de détection de présence d'un dispositif NFC par un autre dispositif NFC émettant un champ électromagnétique, plus particulièrement pendant des périodes de veille du dispositif émettant le champ.

Un mode de réalisation prévoit un procédé dans lequel des seuils de détection, par un premier dispositif NFC, d'un deuxième dispositif NFC, sont ajustés en fonction d'un nombre d'erreurs de détection à l'issue de plusieurs salves d'émission de champ.

Produit programme d'ordinateur, comportant un support de stockage non transitoire comprenant des instructions adaptées à la mise en œuvre du procédé tel que décrit.

Circuit électronique, adapté à la mise en œuvre du procédé tel que décrit.

Selon un mode de réalisation, le premier dispositif NFC entre dans un mode de confirmation lorsqu'au moins l'un des seuils de détection est franchi.

Selon un mode de réalisation, les seuils correspondent à des premier et deuxième seuils délimitant une plage de valeurs d'une grandeur caractéristique d'un signal aux bornes d'un circuit oscillant du premier dispositif.

Selon un mode de réalisation, ladite grandeur correspond à une amplitude du signal aux bornes du circuit oscillant du premier dispositif.

Selon un mode de réalisation, ladite grandeur correspond à un déphasage du signal aux bornes du circuit oscillant du premier dispositif.

Selon un mode de réalisation, la plage est élargie lorsque le nombre d'erreurs de détection est supérieur à une première valeur.

Selon un mode de réalisation, la plage est rétrécie lorsque le nombre d'erreurs de détection est inférieur à une deuxième valeur.

Selon un mode de réalisation, au cours de salves périodiques d'émission de champ par le premier dispositif, la plage est décalée, sans modification d'étendue, en fonction de résultats obtenus au cours d'une ou de plusieurs salves précédentes.

Selon un mode de réalisation, le décalage de la plage est défini par des niveaux mesurés lors d'au moins une salve précédente en l'absence de détection du deuxième dispositif.

Selon un mode de réalisation, le premier dispositif comporte au moins deux modes de fonctionnement, dont un premier mode dans lequel des salves de détection sont espacées d'une durée correspondant à au moins cent fois la durée des salves.

Selon un mode de réalisation, le premier dispositif bascule dans un mode de fonctionnement d'émission d'une séquence d'interrogation telle que définie dans les spécifications du NFC Forum lorsque le deuxième dispositif est détecté à portée.

Un mode de réalisation prévoit un dispositif électronique, comportant un produit programme d'ordinateur tel que décrit.

Un mode de réalisation prévoit un dispositif électronique, comportant un circuit électronique tel que décrit.

### Brève description des dessins

Ces caractéristiques et avantages, ainsi que d'autres, seront exposés en détail dans la description suivante de modes de réalisation et modes de mise en œuvre particuliers faite à titre non limitatif en relation avec les figures jointes parmi lesquelles :
la figure 1 représente, de façon très schématique et sous forme de blocs, un exemple de système de communication en champ proche du type auquel s'appliquent, à titre d'exemple, des modes de réalisation et modes de mise en œuvre décrits ;
la figure 2 est un chronogramme illustrant un exemple de procédé de détection, par un dispositif en mode lecteur et en veille, d'un dispositif en mode carte ;
la figure 3 est un chronogramme illustrant un mode de mise en œuvre d'un procédé de détection, par un dispositif en mode lecteur et en veille, d'un dispositif en mode carte ;
la figure 4 représente, de façon schématique et sous forme de blocs, un mode de réalisation d'un circuit électronique de communication en champ proche ;
la figure 5 représente, de façon schématique et sous forme de blocs, un mode de réalisation d'un circuit configuré pour ajuster des seuils de détection d'un dispositif NFC ;
la figure 6 représente, sous forme de schéma-blocs, un mode de mise en œuvre d'un procédé d'ajustement de seuils de détection d'un dispositif NFC ;
la figure 7 représente, de façon schématique et sous forme de blocs, un autre mode de réalisation d'un circuit configuré pour ajuster des seuils de détection d'un dispositif NFC ;
la figure 8 représente, sous forme de schéma-blocs, un autre mode de mise en œuvre d'un procédé d'ajustement de seuils de détection d'un dispositif NFC ;
la figure 9 représente, de façon schématique et sous forme de blocs, encore un autre mode de réalisation d'un circuit configuré pour ajuster des seuils de détection d'un dispositif NFC ;
la figure 10 représente, sous forme de schéma-blocs, encore un autre mode de mise en œuvre d'un procédé d'ajustement de seuils de détection d'un dispositif NFC ; et
la figure 11 est un exemple de chronogramme illustrant la mise en œuvre des procédés décrits en relation avec les figures 6, 8 et 10.

### Description des modes de réalisation

De mêmes éléments ont été désignés par de mêmes références dans les différentes figures. En particulier, les éléments structurels et/ou fonctionnels communs aux différents modes de réalisation et modes de mise en œuvre peuvent présenter les mêmes références et peuvent disposer de propriétés structurelles, dimensionnelles et matérielles identiques.

Par souci de clarté, seuls les étapes et éléments utiles à la compréhension des modes de réalisation et modes de mise en œuvre décrits ont été représentés et sont détaillés. En particulier, la génération des signaux radiofréquence et leur interprétation n'ont pas été détaillées, les modes de réalisation et modes de mise en œuvre décrits étant compatibles avec les techniques usuelles de génération et d'interprétation de ces signaux.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence, sauf précision contraire, à l'orientation des figures.

Sauf précision contraire, les expressions "environ", "approximativement", "sensiblement", et "de l'ordre de" signifient à 10 % près, de préférence à 5 % près.

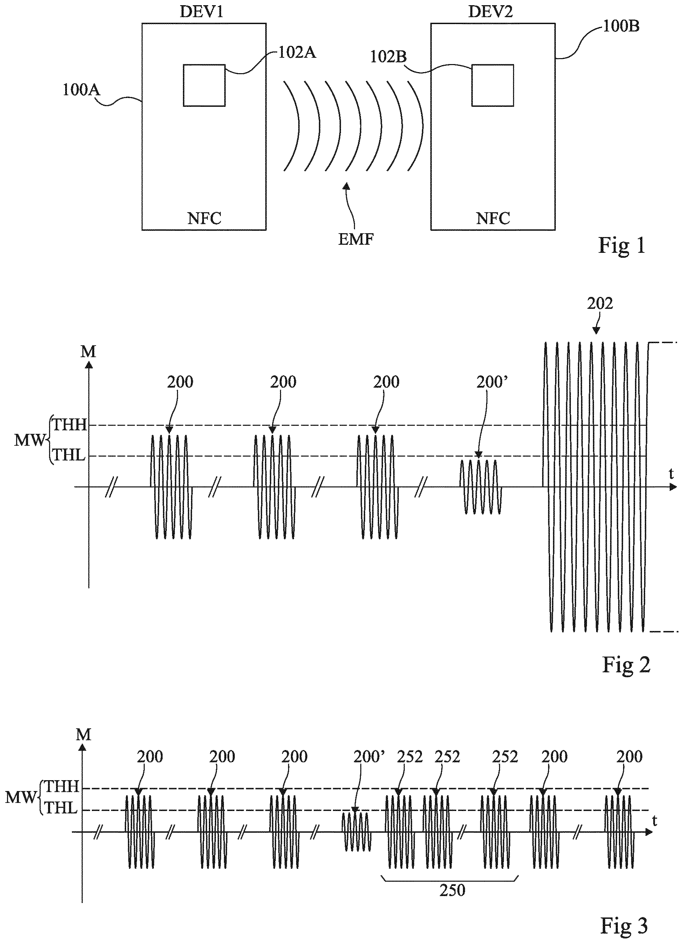

La figure 1 représente, de façon très schématique et sous forme de blocs, un exemple de système de communication en champ proche du type auquel s'appliquent, à titre d'exemple, des modes de réalisation et modes de mise en œuvre décrits.

On suppose arbitrairement le cas de deux dispositifs électroniques similaires, par exemple deux téléphones mobiles, mais ce qui est décrit s'applique plus généralement à tout système dans lequel un lecteur, borne ou terminal rayonne un champ électromagnétique susceptible d'être capté par un transpondeur. Pour simplifier, on fera référence à des dispositifs NFC pour désigner des dispositifs électroniques intégrant un ou plusieurs circuits de communication en champ proche (Near-Field Communication - NFC, en anglais).

Dans l'exemple représenté, un premier dispositif NFC 100A (DEV1) est susceptible de communiquer, par couplage électromagnétique en champ proche, avec un deuxième dispositif NFC 100B (DEV2). Selon les applications, pour une communication, l'un des dispositifs NFC 100A, 100B fonctionne en mode dit lecteur tandis que l'autre dispositif NFC 100B, 100A fonctionne en mode dit carte, ou les deux dispositifs NFC 100A et 100B communiquent en mode dit poste à poste (Peer-to-Peer - P2P, en anglais).

Chaque dispositif NFC 100A, 100B intègre un circuit de communication en champ proche symbolisé, en figure 1, par un bloc 102A, 102B. Les circuits 102A et 102B de communication en champ proche comportent chacun divers éléments ou circuits électroniques de génération ou de détection d'un signal radiofréquence à l'aide d'une antenne (non représentée), par exemple des circuits de modulation ou de démodulation. Lors d'une communication entre les dispositifs NFC 100A et 100B, le signal radiofréquence généré par l'un des dispositifs NFC 100A, 100B est capté par l'autre dispositif NFC 100B, 100A se trouvant à portée.

On considère arbitrairement, comme illustré en figure 1, que le premier dispositif NFC 100A émet un champ électromagnétique (EMF) pour initier une communication avec le deuxième dispositif NFC 100B. Le champ EMF est capté par le deuxième dispositif NFC 100B dès qu'il se trouve à portée. Il se forme alors un couplage entre deux circuits oscillants, en l'espèce celui de l'antenne du premier dispositif NFC 100A et celui de l'antenne du deuxième dispositif NFC 100B. Ce couplage se traduit par une variation de la charge constituée par les circuits du dispositif NFC 100B sur le circuit oscillant de génération du champ EMF du dispositif NFC 100A.

En pratique, pour une communication, une variation correspondante de phase ou d'amplitude du champ émis est détectée par le dispositif 100A, qui entame alors un protocole de communication NFC avec le dispositif 100B. Côté dispositif NFC 100A, on détecte en pratique si l'amplitude de la tension aux bornes du circuit oscillant et/ou le déphasage par rapport au signal généré par le circuit 102A sortent de plages (ou fenêtres) d'amplitudes et/ou de phases délimitées chacune par des premier et deuxième seuils. Par exemple, le premier seuil est inférieur au deuxième seuil. On fera par la suite référence à des seuils inférieur et supérieur.

Dans le cas d'une communication, une fois que le dispositif NFC 100A a détecté la présence du dispositif NFC 100B dans son champ, il entame une procédure d'établissement de communication mettant en œuvre des émissions de requêtes par le dispositif NFC 100A et de réponses par le dispositif NFC 100B (séquence d'interrogation telle que définie dans les spécifications techniques du NFC Forum). Les circuits du dispositif NFC 100B, s'ils sont en mode veille, sont alors réactivés.

Pour des raisons d'économie d'énergie, les dispositifs 100A et 100B, qu'ils soient chacun raccordés au secteur de distribution électrique ou alimentés directement ou indirectement par batterie, sont généralement mis en veille lorsqu'ils ne sont pas utilisés pour une communication. Les dispositifs NFC sont ainsi souvent équipés de circuits de détection d'un autre dispositif se trouvant dans leur champ (à portée) afin de sortir d'un mode veille à des fins de communication.

Dans certaines applications, lorsqu'un dispositif NFC n'est pas en cours de communication, il est commuté en mode dit basse consommation (low power, en anglais), ou mode veille, afin de réduire l'énergie consommée. Cela est en particulier le cas pour les dispositifs NFC alimentés par batteries. Dans le mode basse consommation, un dispositif NFC configuré en mode lecteur exécute un mode dit de détection de carte (Low Power Card Détection - LPCD, en anglais), dans lequel il effectue des boucles de détection.

La détection est analogue à celle opérée lorsque le dispositif n'est pas en mode basse consommation. Toutefois, en mode normal, l'émission de la porteuse est continue et inclut périodiquement des trames d'interrogation tandis que, en mode veille, l'émission du champ s'effectue par salves (burst, en anglais) périodiques et sans trame d'interrogation afin de réduire la consommation. Les salves sont d'une durée nettement inférieure (dans un rapport d'au moins dix, de préférence d'au moins cent) à la durée d'une requête d'interrogation d'une carte en mode normal.

La figure 2 est un chronogramme illustrant un exemple de procédé de détection, par un dispositif en mode lecteur et en mode veille, par exemple le premier dispositif NFC 100A (figure 1), d'un dispositif en mode carte, par exemple le deuxième dispositif NFC 100B (figure 1). La figure 2 illustre plus particulièrement, de façon très schématique, un exemple d'allure d'évolution, en fonction du temps t (en abscisse), d'une amplitude M (en ordonnée) d'un signal aux bornes du circuit oscillant du dispositif NFC 100A opérant en mode lecteur.

Lorsqu'il est en mode veille, le dispositif NFC 100A, qui cherche à détecter la présence du dispositif NFC 100B à portée, émet périodiquement une salve de champ 200. Cette salve de détection ne comporte généralement qu'une porteuse, typiquement à 13,56 MHz, sans modulation, et présente une durée relativement courte par rapport à un intervalle entre deux salves, de préférence dans un rapport d'au moins cent. L'intervalle entre deux salves dépend des dispositifs, mais est généralement de quelques centaines de millisecondes (typiquement 256 ms), tandis que la durée d'une salve 200 est de l'ordre de la dizaine ou de la centaine de microsecondes.

À titre d'exemple, le dispositif 100A sort du mode veille temporairement et périodiquement pour émettre les salves 200. En général, on préfère toutefois utiliser une machine d'états pour l'émission de salves en mode basse consommation. Cela évite de réveiller un microcontrôleur du dispositif 100A et permet ainsi de rester en mode veille.

Quand le dispositif 100B se trouve dans le champ et modifie la charge du circuit oscillant du dispositif émetteur 100A, cela se traduit par une variation d'une grandeur caractéristique d'un signal aux bornes du circuit oscillant lors d'une salve 200' correspondante. En pratique, la modification de la charge du circuit oscillant du dispositif émetteur 100A se traduit par une variation d'amplitude et/ou de phase du signal aux bornes du circuit oscillant lors de la salve 200'.

Dans l'exemple de la figure 2, on suppose arbitrairement que la présence du dispositif 100B provoque une baisse d'amplitude (salve 200'). Toutefois, la présence du dispositif 100B peut, selon les cas, également se traduire par une augmentation de l'amplitude. Il en est de même pour le déphasage par rapport au signal émis.

Dans l'exemple représenté, si la variation d'amplitude M est suffisante pour sortir d'une fenêtre ou plage MW d'amplitudes, délimitée par un seuil inférieur THL (ou seuil bas) et par un seuil supérieur THH (ou seuil haut), le dispositif émetteur 100A bascule directement en mode actif, c'est-à-dire qu'il quitte le mode basse consommation, et émet alors normalement (émission 202). De façon analogue, si la variation de phase (non représentée) est suffisante pour sortir d'une plage ou fenêtre de phases, notée PW, délimitée par des seuils inférieur et supérieur, le dispositif émetteur 100A bascule directement en mode actif, c'est-à-dire qu'il quitte le mode basse consommation, et émet alors normalement.

Ainsi, lorsqu'une carte est considérée détectée et que le dispositif émetteur 100A est activé, il se met à émettre le champ avec des trames 202 d'interrogation (polling, en anglais) d'une communication. Ces trames sont normalisées (elles répondent aux spécifications techniques du NFC Forum) et sont fonction de protocoles de communication supportés par le lecteur 100A. La durée d'émission d'une trame est généralement de l'ordre de quelques millisecondes à quelques dizaines de millisecondes.

Si un dispositif configuré en mode carte, par exemple, le dispositif récepteur 100B (en mode carte), est présent, ce dispositif répond alors selon la requête du protocole qu'il supporte et la communication démarre. Lorsque la communication est terminée, ou lorsque le dispositif récepteur 100B sort du champ, le dispositif émetteur 100A repasse en mode basse consommation au bout d'un certain temps (de l'ordre de la seconde) afin de réduire sa consommation. Il se remet alors à émettre périodiquement des salves 200 de détection sans requête de communication.

En revanche, si aucun dispositif configuré en mode carte n'est présent, à portée, au moment où le dispositif 100A est activé après avoir considéré qu'il a détecté une carte, la communication ne peut pas s'établir. Le dispositif émetteur 100A repasse, par exemple, en mode basse consommation au bout d'un certain temps (de l'ordre de la seconde) afin de réduire sa consommation énergétique. Il se remet alors à émettre périodiquement des salves 200 de détection sans requête de communication.

Dans l'exemple du procédé décrit en relation avec la figure 2, le dispositif 100A est sorti du mode basse consommation, c'est-à-dire sorti de veille, dès qu'il croit détecter un dispositif en mode carte dans son champ.

En pratique, la détection, par le dispositif 100A émetteur, d'une variation de l'amplitude du champ ou de sa phase peut néanmoins être perturbée par de nombreux facteurs environnementaux, par exemple par la présence d'objets métalliques à proximité, par des conditions de température, etc. Cela peut conduire soit à des erreurs de détection, soit à des absences de détection.

En particulier, si la plage MW d'amplitude et/ou la plage PW de phase est mal adaptée, les perturbations peuvent être à l'origine d'un nombre important d'erreurs de détection. Il en résulte généralement une forte augmentation de consommation énergétique du dispositif 100A, causée par de nombreuses sorties de veille intempestives. À l'inverse, dans le cas d'un nombre important d'absences de détection, cela peut entraîner un délai ou une impossibilité d'établissement d'une communication avec un autre dispositif NFC. De telles absences de détection sont donc également susceptibles de nuire au fonctionnement du dispositif NFC 100A.

Pour tenter de pallier ces inconvénients, les solutions actuelles consistent à adapter les seuils, par exemple par calibration, avant que le dispositif commute en mode basse consommation. Une telle calibration des seuils consiste typiquement à émettre une salve de porteuse et à mesurer le signal aux bornes du circuit oscillant pour déterminer un niveau « à vide ». Le seuil de détection est alors adapté par rapport à cette situation à vide. En général, ces solutions s'avèrent toutefois insatisfaisantes, notamment dans des environnements fortement perturbés.

La figure 3 est un chronogramme illustrant un mode de mise en œuvre d'un procédé de détection, par un dispositif en mode lecteur et en mode veille, par exemple le premier dispositif NFC 100A (figure 1), d'un dispositif en mode carte, par exemple le deuxième dispositif NFC 100B (figure 1). La figure 3 illustre plus particulièrement, de façon très schématique, un exemple d'allure d'évolution, en fonction du temps t (en abscisse), d'une amplitude M (en ordonnée) d'un signal aux bornes du circuit oscillant du dispositif NFC 100A opérant en mode lecteur.

Le procédé de la figure 3 comprend des étapes semblables à celles du procédé de la figure 2. Ces étapes semblables ne seront pas décrites à nouveau ci-après.

Par rapport au procédé exposé en relation avec la figure 2, le mode de mise en œuvre illustré en figure 3 prévoit que le dispositif émetteur 100A ne soit pas sorti du mode basse consommation dès le premier franchissement d'un seuil d'amplitude et/ou d'un seuil de phase. Par rapport à l'exemple de la figure 2, cela revient, par exemple, à ne pas réveiller le dispositif 100A directement après la salve 200' pour tenter de débuter l'émission 202.

Selon ce mode de mise en œuvre, on prévoit que la machine d'états, en charge de l'émission des salves périodiques 200, entre préalablement dans un mode 250 de confirmation lorsque l'amplitude et/ou la phase de l'une des salves 200 (par exemple, la salve 200') sort pour la première fois de la fenêtre MW et/ou de la fenêtre PW. Dans le mode 250 de confirmation, la machine d'états émet, par exemple, plusieurs salves 252 d'émission de champ, par exemple dix salves 252 d'émission de champ.

Les salves 252 sont, par exemple, émises par le dispositif 100A à une fréquence supérieure à la fréquence d'émission des salves 200. À titre d'exemple, les salves 252 sont émises toutes les 1 ms environ, soit à une fréquence d'environ 1 kHz, contre environ 3 à 4 Hz pour les salves 200.

On prévoit en outre, par exemple, d'estimer une amplitude moyenne et une phase moyenne des dix salves 252 émises au cours du mode 250 de confirmation.

Dans l'exemple représenté, l'amplitude moyenne des salves 252 ne sort pas de la fenêtre MW. En supposant arbitrairement que la phase des salves 252 ne sort pas de la fenêtre PW, on considère, à l'issue du mode de confirmation 250, que le dispositif NFC 100A a commis une erreur de détection. En d'autres termes, on en conclut que l'émission de la salve 200' n'était probablement pas due à la présence d'une carte à portée, mais, par exemple, à une perturbation. Le dispositif NFC 100A est alors maintenu en mode basse consommation, et la machine d'états se remet à émettre, périodiquement, des salves 200. Par rapport à l'exemple de la figure 2, cela permet ainsi d'éviter une sortie de veille intempestive du dispositif NFC 100A causée par la salve 200'.

En revanche, dans le cas (non représenté) où l'amplitude moyenne et/ou la phase moyenne des salves 252 sortent de la fenêtre MW et/ou de la fenêtre PW, on considère, à l'issue du mode de confirmation 250, qu'un autre dispositif NFC configuré en mode carte, par exemple, le dispositif 100B, est détecté. En d'autres termes, on en conclut que l'émission de la salve 200' était probablement due à la présence d'une carte située à portée. À l'issue des salves 252 émises pendant le mode de confirmation 250, le dispositif NFC 100A quitte alors le mode basse consommation et effectue plusieurs requêtes d'interrogation (typiquement des requêtes A, B, F, V telles que décrites dans la boucle d'interrogation standard de la norme NFC Forum). En d'autres termes, par rapport à l'exemple illustré en figure 2, cela revient dans ce cas à débuter l'émission 202 à l'issue du mode de confirmation 250, et non pas directement après la salve 200'.

Un avantage du mode de mise en œuvre exposé en relation avec la figure 3 tient au fait qu'il permet de limiter, voire d'éviter, les sorties de veille intempestives dues, par exemple, à des perturbations. Par rapport au procédé exposé en relation avec la figure 2, le mode de mise en œuvre exposé en relation avec la figure 3 permet de réduire la consommation énergétique du dispositif 100A, améliorant ainsi son autonomie.

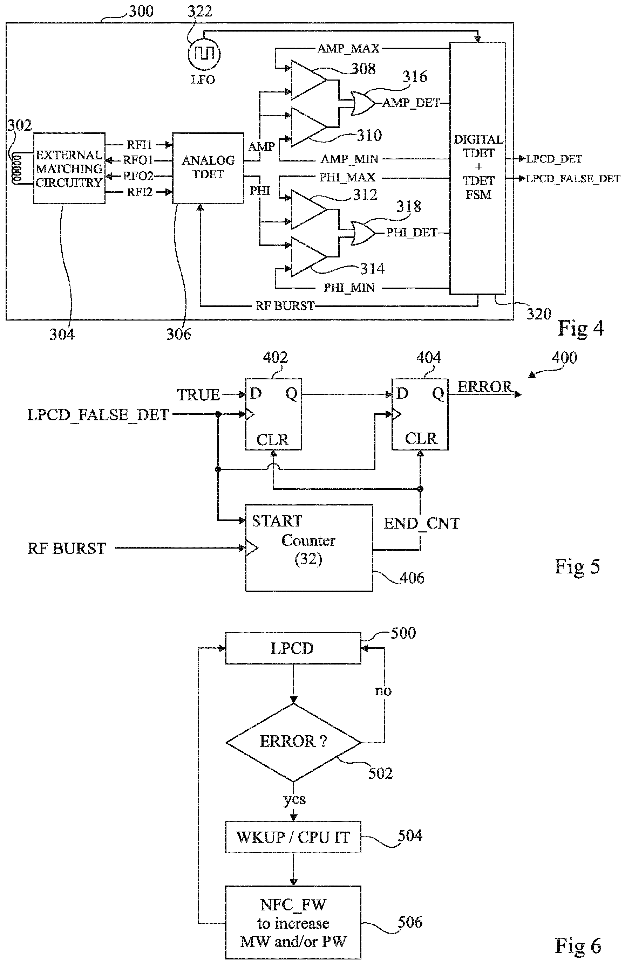

La figure 4 représente, de façon schématique et sous forme de blocs, un mode de réalisation d'un circuit électronique 300 de communication en champ proche. Le circuit 300 correspond, par exemple, à tout ou partie du circuit 102A de communication en champ proche équipant le premier dispositif NFC 100A (figure 1).

Le circuit 300 comporte une antenne 302 symbolisée, en figure 4, par un enroulement inductif. Dans l'exemple représenté, l'antenne 302 est reliée ou connectée à un circuit 304 (EXTERNAL MATCHING CIRCUITRY) d'adaptation d'impédance. L'antenne 302 est associée à un élément capacitif, généralement parallèle (par exemple faisant partie du circuit 304), pour constituer un circuit oscillant.

Dans l'exemple représenté, le circuit 304 est relié ou connecté à un circuit analogique 306 (ANALOG TDET) de détection de dispositifs NFC en mode carte. Le circuit 306 reçoit du circuit 304 des signaux RFI1 et RFI2 captés par l'antenne 302 (généralement en mode différentiel) et transmet à l'antenne, via le circuit 304, des signaux à émettre (RFO1 et RFO2). Le circuit 306 inclut généralement un transformateur à changement de mode (balun en anglais pour balanced-unbalanced), chargé de convertir des signaux différentiels en signaux de mode commun et inversement. Le circuit 306 intègre également un modulateur de signaux à émettre et un démodulateur de signaux reçus, ainsi qu'un séparateur amplitude/phase pour extraire des informations de variation d'amplitude et de phase par rapport au signal émis.

Le circuit 306 reçoit un signal de porteuse (non représenté) typiquement à 13,56 MHz pour la norme NFC. Le circuit 306 reçoit également, d'un bloc 320 (DIGITAL TDET + TDET FSM) de détection de dispositifs NFC opérant en mode carte, un signal RF BURST de commande de salves d'émission de champ par l'antenne 302 (correspondant aux salves 200, figures 2 et 3). Le signal RF BURST est, par exemple, un signal binaire, dont une commutation vers un état (par exemple l'état haut) commande le début d'une salve d'émission de champ et dont une commutation vers l'autre état (l'état bas, dans cet exemple) commande la fin de la salve d'émission de champ.

En réception, des signaux analogiques démodulés AMP et PHI, par exemple images respectivement de l'amplitude de la tension aux bornes du circuit oscillant 302 et du déphasage par rapport au signal émis, sont fournis par le circuit 306 à des comparateurs 308, 310, 312 et 314. Plus précisément, dans l'exemple représenté :
un comparateur 308 compare le signal AMP à un signal AMP_MAX image d'un seuil haut d'amplitude ;
un autre comparateur 310 compare le signal AMP à un autre signal AMP_MIN image d'un seuil bas d'amplitude ;
encore un autre comparateur 312 compare le signal PHI à encore un autre signal PHI_MAX image d'un seuil haut de phase (ou de déphasage) ; et
encore un autre comparateur 314 compare le signal PHI à encore un autre signal PHI_MIN image d'un seuil bas de phase (ou de déphasage).

En conservant les notations introduites en relation avec les figures 2 et 3 :
les signaux AMP_MIN et AMP_MAX correspondent respectivement aux seuils inférieur THL et supérieur THH délimitant la plage MW d'amplitudes ; et
les signaux PHI_MIN et PHI_MAX correspondent respectivement aux seuils inférieur et supérieur délimitant la plage PW de phases (ou de déphasages).

On suppose que la sortie de chaque comparateur 308, 310, 312, 314 fournit un signal binaire (en tout ou rien) dont :
un état, par exemple l'état haut, indique que le signal AMP, PHI est soit supérieur au seuil haut AMP_MAX, PHI_MAX correspondant, soit inférieur au seuil bas AMP_MIN, PHI_MIN correspondant ; et
l'autre état, dans cet exemple l'état bas, indique que le signal AMP, PHI est à la fois inférieur au seuil haut AMP_MAX, PHI_MAX et supérieur au seuil bas AMP_MIN, PHI_MIN correspondant.

Dans le circuit 300, une porte logique « OU » 316 est reliée, de préférence connectée, aux sorties des comparateurs 308 et 310. La porte logique OU 316 fournit, en sortie, un signal AMP_DET binaire dont :
un état, par exemple l'état haut, indique que le signal AMP est soit supérieur au seuil haut AMP_MAX, soit inférieur au seuil bas AMP_MIN ; et
l'autre état, dans cet exemple l'état bas, indique que le signal AMP est à la fois inférieur au seuil haut AMP_MAX et supérieur au seuil bas AMP_MIN.

De façon analogue, une autre porte logique « OU » 318 est reliée, de préférence connectée, aux sorties des comparateurs 312 et 314. La porte logique OU 318 fournit, en sortie, un signal PHI_DET binaire dont :
un état, par exemple l'état haut, indique que le signal PHI est soit supérieur au seuil haut PHI_MAX, soit inférieur au seuil bas PHI_MIN ; et
l'autre état, dans cet exemple l'état bas, indique que le signal PHI est à la fois inférieur au seuil haut PHI_MAX et supérieur au seuil bas PHI_MIN.

En d'autres termes, dans cet exemple, le signal AMP_DET, PHI_DET est à l'état haut lorsque le signal AMP, PHI sort de la plage MW, PW. À l'inverse, le signal AMP_DET, PHI_DET est à l'état bas lorsque le signal AMP, PHI reste à l'intérieur de la plage MW, PW.

Ainsi, lorsqu'au moins l'un des signaux AMP_DET et PHI_DET est à l'état haut, cela signifie que le dispositif 100A (figure 1) croit détecter un autre dispositif NFC dans son champ. En revanche, lorsque les signaux AMP_DET et PHI_DET sont tous deux à l'état bas, cela signifie que le dispositif 100A ne croit détecter aucun dispositif NFC dans son champ.

Les signaux AMP_DET et PHI_DET sont transmis, par les portes logiques OU 316 et 318, au bloc 320 de détection de dispositifs NFC opérant en mode carte. Dans l'exemple représenté, le bloc 320 du circuit 300 symbolise un circuit numérique de détection de dispositifs NFC en mode carte, associé à une machine d'états (Finite State Machine - FSM, en anglais). Le bloc 320 du circuit 300 permet, par exemple, d'exécuter des opérations associées à la gestion du mode 250 de confirmation précédemment décrit en relation avec la figure 3.

Le bloc 320 du circuit 300 transmet les signaux AMP_MAX et AMP_MIN aux entrées respectives des comparateurs 308 et 310. De façon analogue, le bloc 320 transmet les signaux PHI_MAX et PHI_MIN aux entrées respectives des comparateurs 312 et 314.

Dans le circuit 300 illustré en figure 4, un oscillateur 322 (LFO) transmet un signal de synchronisation ou d'horloge au bloc 320. L'oscillateur 322 est par exemple un oscillateur basse fréquence (Low-Frequency Oscillator - LFO, en anglais) par rapport à la fréquence (13,56 MHz) de la porteuse des signaux émis. À titre d'exemple, la fréquence de l'oscillateur 322 est de l'ordre de plusieurs dizaines de kilohertz, par exemple égale à environ 64 kHz.

En fonctionnement, on suppose initialement que les signaux AMP_DET et PHI_DET sont tous deux à l'état bas. Une commutation vers l'état haut d'au moins l'un des signaux AMP_DET et PHI_DET provoque, par exemple, l'activation du mode 250 de confirmation conduisant à l'émission des salves 252 comme exposé en relation avec la figure 3.

Dans un cas où, à l'issue du mode 250, un dispositif NFC en mode carte est considéré avoir été détecté à portée, le dispositif 100A est alors sorti de veille et cherche à débuter une communication avec ce dispositif NFC. Pour cela, dans l'exemple représenté, le bloc 320 transmet à d'autres circuits (non représentés) du dispositif 100A un signal binaire LPCD_DET.

Le signal LPCD_DET est, par exemple, temporairement commuté depuis un état bas vers un état haut à chaque fois que le dispositif 100A détecte, à l'issue du mode 250 de confirmation, un autre dispositif NFC dans son champ. Le signal LPCD_DET est, par exemple, commuté de l'état haut vers l'état bas à chaque fois que le dispositif 100A est remis en veille.

À titre d'exemple, la commutation vers l'état haut du signal LPCD_DET commande la sortie de veille du dispositif 100A.

En revanche, dans un autre cas où, à l'issue du mode 250, aucun autre dispositif NFC opérant en mode carte n'est considéré avoir été détecté à portée, le dispositif 100A est maintenu en mode veille et recommence à émettre des salves 200 (figure 3). Dans l'exemple représenté, le bloc 320 transmet alors à d'autres circuits (non représentés) du dispositif 100A un autre signal binaire LPCD_FALSE_DET.

Le signal LPCD_FALSE_DET est, par exemple, temporairement commuté depuis un état bas vers un état haut à chaque fois que le dispositif 100A commet une erreur de détection, autrement dit lorsque le dispositif 100A est maintenu en veille à l'issue du mode 250 de confirmation. Le signal LPCD_FALSE_DET est, par exemple, commuté vers l'état bas lors de l'émission de la première salve 200 suivant la sortie du mode 250 de confirmation.

Les figures 5 à 11 ci-dessous illustrent des modes de réalisation et modes de mise en œuvre tirant profit du signal LPCD_FALSE_DET, par exemple fourni par le circuit 300 de la figure 4, pour ajuster les seuils de détection AMP_MAX, AMP_MIN et/ou PHI_MAX, PHI_MIN. Les modes de réalisation et modes de mise en œuvre ci-dessous sont en particulier décrits en relation avec des exemples d'application au système de communication en champ proche de la figure 1, étant entendu que la personne du métier est capable de transposer ces modes de réalisation et modes de mise en œuvre à d'autres systèmes de communication en champ proche.

La figure 5 représente, de façon schématique et sous forme de blocs, un mode de réalisation d'un circuit 400 configuré pour ajuster des seuils de détection d'un dispositif NFC. Dans le système de communication en champ proche de la figure 1, le circuit 400 permet notamment d'ajuster les seuils de détection, par le premier dispositif 100A, du deuxième dispositif 100B. Le circuit 400 est par exemple associé au circuit 300 de la figure 4.

Le circuit 400 comporte une bascule 402 recevant, sur une entrée de synchronisation (>), le signal LPCD_FALSE_DET (figure 4) et, sur une entrée de données (D), un signal binaire noté TRUE. En fonctionnement, le signal binaire TRUE est par exemple maintenu à l'état haut.

Le circuit 400 comporte en outre une autre bascule 404 recevant, sur une entrée de synchronisation (>), le signal LPCD_FALSE_DET et, sur une entrée de données (D), un signal binaire (non représenté) provenant d'une sortie (Q) de la bascule 402. La bascule 404 fournit, en sortie (Q), un signal binaire noté ERROR.

Le circuit 400 comporte par ailleurs un compteur 406 (Counter (32)) de salves d'émission de champ. Le compteur 406 reçoit, sur une entrée d'initialisation (START), le signal LPCD_FALSE_DET et, sur une autre entrée de comptage (>), le signal RF BURST (figure 4) de commande des salves 200. En pratique, le compteur 406 est par exemple adapté à dénombrer, après un premier front montant du signal LPCD_FALSE_DET, plusieurs fronts montants consécutifs du signal RF BURST, c'est-à-dire plusieurs salves 200 consécutives. Dans l'exemple représenté, le compteur 406 est adapté à dénombrer trente-deux fronts montants consécutifs du signal RF BURST.

Le compteur 406 fournit, en sortie, un signal binaire noté END_CNT, représentant par exemple l'arrivée du compteur à son compte maximal (retenue) ou, en variante, son bit de poids fort ou bit le plus significatif (MSB - Most Significant Bit) en dimensionnant le compteur avec un bit de plus. Le compteur est alors initialisé à zéro et opère en compteur monotone croissant. En variante, le compteur est initialisé à sa valeur maximale et opère en compteur monotone décroissant. Le signal END_CNT commute à l'état haut lorsque le compteur arrive à zéro.

Chaque bascule 402, 404 reçoit, sur une entrée de réinitialisation (CLR), le signal END_CNT. Dans l'exemple représenté, le signal binaire END_CNT est temporairement commuté vers l'état haut, pour réinitialiser les bascules 402 et 404, à chaque fois que trente-deux salves d'émission de champ successives ont été dénombrées par le compteur 406.

En fonctionnement, on suppose initialement que le signal LPCD_FALSE_DET est à l'état bas et que le compteur 406 n'a pas encore commencé à décompter des salves d'émission de champ. Depuis cet état initial dans lequel les bascules 402 et 404 présentent des sorties Q à l'état bas, une première erreur de détection provoque la commutation du signal LPCD_FALSE_DET vers l'état haut. Le signal en sortie Q de la bascule 402 commute alors vers l'état haut et le compteur 406 est initialisé, c'est-à-dire commence à dénombrer ou décompter les salves 200 (figure 3) d'émission de champ. La sortie Q de la bascule 404 reste à l'état bas dans la mesure où son entrée D est encore à l'état bas lors du front montant du signal LPCD_FALSE_DET. Le signal LPCD_FALSE_DET est par exemple commuté vers l'état bas dès la première salve 200 émise après l'initialisation du compteur 406.

Si une deuxième erreur de détection est commise par le dispositif 100A avant la fin du décompte, par le compteur 406, des trente-deux salves 200 d'émission de champ consécutives, le signal LPCD_FALSE _DET est à nouveau commuté vers l'état haut. Cela provoque alors la transmission de l'état haut de la sortie Q de la bascule 402 vers la sortie Q de la bascule 404 et donc la mise à l'état haut du signal ERROR.

En revanche, si aucune erreur de détection n'est commise par le dispositif 100A avant la fin du décompte, les bascules 402 et 404 sont réinitialisées par la commutation vers l'état haut du signal END_CNT. On se ramène alors à l'état initial, où le signal LPCD_FALSE_DET ainsi que les sorties Q des bascules 402 et 404 sont à l'état bas et où le compteur 406 n'a pas commencé son décompte de salves d'émission de champ.

De manière générale, le circuit 400 est donc configuré pour commuter le signal ERROR vers l'état haut si deux erreurs de détection sont séparées par moins de trente-deux salves d'émission de champ consécutives. La suite de la description montre comment il est possible tirer profit du signal ERROR afin d'ajuster les seuils de détection AMP_MIN, AMP_MAX et/ou PHI_MIN, PHI_MAX.

La figure 6 représente, sous forme de schéma-blocs, un mode de mise en œuvre d'un procédé d'ajustement de seuils de détection d'un dispositif NFC. Le procédé est par exemple mis en œuvre par le circuit 400 (figure 5) équipant le premier dispositif 100A (figure 1).

Selon ce mode de mise en œuvre, le dispositif 100A est, au cours d'une étape initiale (bloc 500, LPCD), configuré en mode de détection de carte et en veille. Depuis l'étape initiale 500, on teste ou on observe (bloc 502, ERROR?) l'état du signal binaire ERROR en sortie Q de la bascule 404 (figure 5).

Si le signal ERROR est à l'état haut au cours de l'étape 502, on passe alors (sortie yes du bloc 502) à une étape (bloc 504, WKUP / CPU IT) de sortie de veille. Le passage de l'étape 502 à l'étape 504 peut par exemple provoquer une interruption d'une unité de traitement ou microcontrôleur du premier dispositif 100A.

Depuis l'étape 504 de sortie de veille, on passe ensuite à une autre étape (bloc 506, NFC_FW to increase MW and/or PW). Dans l'étape 506, la plage MW d'amplitudes et/ou la plage PW de phases est élargie. En d'autres termes, l'étape 506 permet d'augmenter :
un écart séparant le seuil haut d'amplitude AMP_MAX du seuil bas d'amplitude AMP_MIN ; et/ou
un autre écart séparant le seuil haut de phase PHI_MAX du seuil bas de phase PHI_MIN.

En pratique, l'élargissement de la plage MW d'amplitudes et/ou de la plage PW de phases est par exemple effectué par un logiciel exécuté par un microcontrôleur du dispositif 100A.

En revanche, si le signal ERROR est à l'état bas au cours de l'étape 502, on revient (sortie no du bloc 502) à l'étape initiale 500. On ne modifie alors ni la plage MW d'amplitudes, ni la plage PW de phases.

Un avantage du procédé exposé en relation avec la figure 6 tient au fait qu'il permet d'augmenter l'étendue de la plage MW d'amplitudes et/ou de la plage PW de phases en fonction du nombre d'erreurs de détection commises par le dispositif 100A par rapport à un nombre donné de salves d'émission de champ (32 salves, dans cet exemple). En supposant par exemple que le dispositif 100A est utilisé dans un environnement perturbé, provoquant initialement de nombreuses erreurs de détection, la mise en œuvre du procédé ci-dessus permet d'adapter peu à peu les fenêtres de détection afin de réduire la sensibilité du dispositif 100A aux perturbations.

En réduisant la sensibilité du dispositif 100A aux perturbations, on évite notamment d'activer trop fréquemment le mode 250 de confirmation. Cela permet par conséquent de réduire la consommation énergétique du dispositif NFC 100A, du fait que les salves 252 (figure 3) émises pendant le mode 250 sont plus fréquentes que les salves 200 émises hors de ce mode. On améliore ainsi l'autonomie du dispositif 100A, notamment par rapport à un dispositif dont les fenêtres de détection seraient fixées en usine et ne seraient pas adaptables ultérieurement en fonction des différentes situations d'utilisation possibles du dispositif 100A.

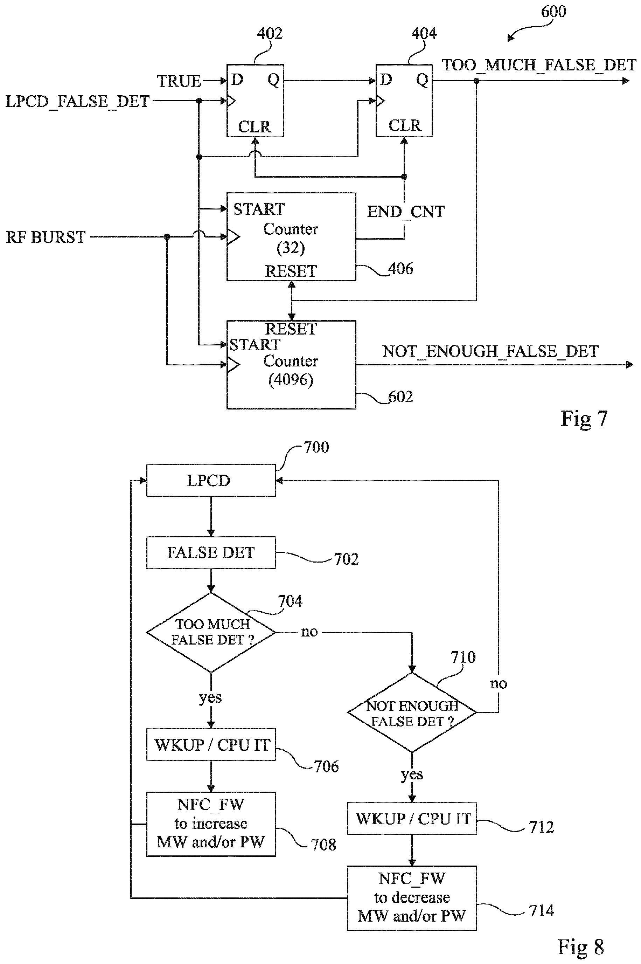

La figure 7 représente, de façon schématique et sous forme de blocs, un autre mode de réalisation d'un circuit 600 configuré pour ajuster des seuils de détection d'un dispositif NFC. Le circuit 600 de la figure 7 présente des éléments communs avec le circuit 400 de la figure 5. Ces éléments communs ne seront pas décrits à nouveau ci-après. Seules les différences entre le circuit 600 de la figure 7 et le circuit 400 de la figure 5 seront décrites. Le circuit 600 est par exemple associé au circuit 300 de la figure 4.

Le circuit 600 de la figure 7 se distingue du circuit 400 de la figure 5 principalement en ce que le circuit 600 comporte un autre compteur 602 (Counter (4096)). Le compteur 602 reçoit, sur une entrée d'initialisation (START), le signal binaire LPCD_FALSE_DET (figure 4) et, sur une entrée de synchronisation (>), le signal binaire RF BURST (figure 4) de commande des salves d'émission de champ.

Le compteur 602 est par exemple adapté à dénombrer, après détection d'un front montant du signal LPCD_FALSE_DET, des fronts montants consécutifs du signal RF BURST, par exemple quatre mille quatre-vingt-seize (4096) fronts montants consécutifs du signal RF BURST. Le compteur 602 fournit, en sortie, un signal binaire noté NOT_ENOUGH_FALSE_DET, représentant, comme pour le compteur 406, selon la valeur d'initialisation, l'arrivée du compteur à son compte maximal ou à zéro.

En outre, dans le circuit 600, la bascule 404 fournit en sortie Q un signal noté TOO_MUCH_FALSE_DET analogue au signal ERROR du circuit 400 de la figure 5. Chaque compteur 406, 602 reçoit, sur une entrée de réinitialisation (RESET), le signal TOO_MUCH_FALSE_DET.

En fonctionnement, on suppose initialement que le signal LPCD_FALSE_DET est à l'état bas et que les compteurs 406 et 602 n'ont pas encore commencé leurs décomptes de salves 200 (figure 3) d'émission de champ. Depuis cet état initial, dans lequel les bascules 402 et 404 présentent des sorties Q à l'état bas, de même que, par exemple, les sorties des compteurs 406 et 602, une première erreur de détection provoque la commutation du signal LPCD_FALSE_DET vers l'état haut. Le signal en sortie Q de la bascule 402 commute alors vers l'état haut et les compteurs 406 et 602 sont initialisés, c'est-à-dire commencent à dénombrer ou décompter les salves 200 d'émission de champ. Le signal LPCD_FALSE_DET est par exemple commuté vers l'état bas dès la première salve 200 suivant la sortie du mode 250 de confirmation (figure 3).

Dans le cas où une deuxième erreur de détection est commise par le dispositif 100A avant la fin du décompte, par le compteur 406, des trente-deux salves d'émission de champ consécutives, le signal LPCD_FALSE_DET est à nouveau commuté vers l'état haut. Cela provoque alors la mise à l'état haut du signal TOO_MUCH_FALSE_DET en sortie Q de la bascule 404 et la réinitialisation des compteurs 406 et 602.

À l'inverse, si le signal TOO_MUCH_FALSE_DET n'est pas mis à l'état haut avant la fin du décompte du compteur 602, c'est-à-dire si une seule erreur de détection intervient pendant les trente-deux salves, les bascules 402 et 404 sont réinitialisées par la sortie du compteur 406.

Le compteur 602 continue quant à lui de compter ou décompter les salves et le signal NOT_ENOUGH_FALSE_DET reste à l'état bas.

Si une seule erreur de détection intervient pendant 4096 salves, alors le signal NOT_ENOUGH_FALSE_DET en sortie du compteur 602 commute à l'état haut.

De manière générale, le circuit 600 est donc configuré pour :
commuter le signal NOT_ENOUGH_FALSE_DET vers l'état haut si, après une première erreur de détection, aucune autre erreur de détection n'est commise au cours de quatre mille quatre-vingt-seize salves 200 d'émission de champ consécutives ; et
commuter le signal TOO_MUCH_FALSE_DET vers l'état haut si deux erreurs de détection sont séparées par moins de trente-deux salves 200 d'émission de champ consécutives, parmi les quatre mille quatre-vingt-seize salves d'émission dénombrées par le compteur 602.

La suite de la description montre comment il est possible tirer profit des signaux TOO_MUCH_FALSE_DET et NOT_ENOUGH_FALSE_DET pour ajuster des seuils de détection du dispositif 100B par le dispositif 100A.

La figure 8 représente, sous forme de schéma-blocs, un autre mode de mise en œuvre d'un procédé d'ajustement de seuils de détection d'un dispositif NFC. Le procédé est par exemple mis en œuvre par le circuit 600 (figure 7) équipant le premier dispositif 100A (figure 1).

Selon ce mode de mise en œuvre, le dispositif 100A est, au cours d'une étape initiale (bloc 700, LPCD), configuré en mode de détection de carte et en veille. Depuis l'étape initiale 700, on teste après chaque erreur de détection (bloc 702, FALSE DET) si le signal TOO_MUCH_FALSE_DET est à l'état haut (bloc 704, TOO MUCH FALSE DET?).

Si le signal TOO_MUCH_FALSE_DET est à l'état haut (sortie yes du bloc 704), on passe alors à une étape (bloc 706, WKUP / CPU IT) de sortie de veille. L'étape 706 de la figure 8 est par exemple analogue à l'étape 504 précédemment décrite en relation avec la figure 6. Depuis l'étape 706 de sortie de veille, on passe ensuite à une autre étape (bloc 708, NFC_FW to increase MW and/or PW). L'étape 708 de la figure 8 est par exemple analogue à l'étape 506 précédemment décrite en relation avec la figure 6. En particulier, durant l'étape 708, la plage MW d'amplitudes et/ou la plage PW de phases est élargie.

En revanche, si le signal TOO_MUCH_FALSE_DET est à l'état bas (sortie no du bloc 704), on teste alors (bloc 710, NOT ENOUGH FALSE DET?) si le signal NOT_ENOUGH_FALSE_DET est à l'état haut.

Si le signal NOT_ENOUGH_FALSE_DET est à l'état haut, on passe alors à une étape (bloc 712, WKUP / CPU IT) de sortie de veille. L'étape 712 est par exemple analogue à l'étape 706. Depuis l'étape 712 de sortie de veille, on passe ensuite à une autre étape (bloc 714, NFC_FW to decrease MW and/or PW). L'étape 714 est par exemple analogue à l'étape 708, à la différence près que, dans l'étape 714, la plage MW et/ou la plage PW est rétrécie au lieu d'être élargie.

En revanche, si le signal NOT_ENOUGH_FALSE_DET est à l'état bas (sortie no du bloc 710), on revient directement à l'étape initiale 700. En d'autres termes, tant qu'aucun signal parmi les signaux TOO_MUCH_FALSE_DET et NOT_ENOUGH_FALSE_DET n'est commuté vers l'état haut, les plages MW et PW demeurent inchangées.

Un avantage du procédé exposé en relation avec la figure 8 tient au fait qu'il permet non seulement d'augmenter, mais aussi de diminuer, l'étendue de la plage MW d'amplitudes et/ou de la plage PW de phases en fonction du nombre d'erreurs de détection commises par le dispositif 100A. Par rapport au procédé exposé en relation avec la figure 6, le procédé de la figure 8 permet d'adapter encore davantage les fenêtres de détection aux situations d'utilisation rencontrées par le dispositif 100A. En particulier, le procédé de la figure 8 permet d'optimiser encore davantage la consommation énergétique du dispositif 100A, par exemple dans un cas où le dispositif 100A est utilisé tantôt dans un environnement très perturbé et tantôt dans un environnement moins perturbé.

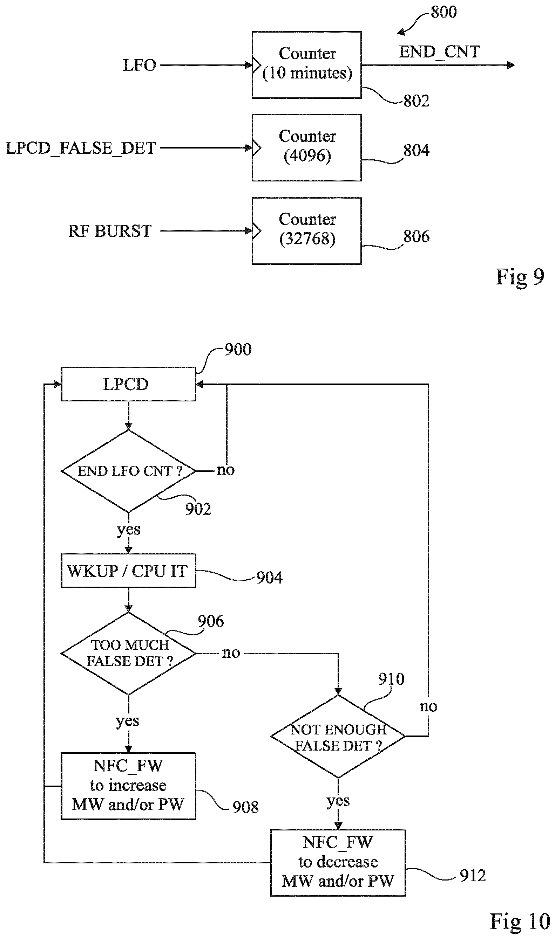

La figure 9 représente, de façon schématique et sous forme de blocs, encore un autre mode de réalisation d'un circuit 800 configuré pour ajuster des seuils de détection d'un dispositif NFC. Le circuit 800 est par exemple associé au circuit 300 de la figure 4.

Dans l'exemple représenté, le circuit 800 comporte :
un premier compteur 802 (Counter (10minutes)), dont une entrée de comptage (>) reçoit un signal LFO périodique provenant par exemple de l'oscillateur basse fréquence 322 (figure 4) ;
un deuxième compteur 804 (Counter (4096)), dont une entrée de comptage (>) reçoit le signal binaire LPCD_FALSE_DET (figure 4) ; et
un troisième compteur 806 (Counter (32768)), dont une entrée de comptage (>) reçoit le signal RF BURST de commande des salves d'émission de champ.

En pratique, le compteur 802 est par exemple adapté à dénombrer des fronts montants du signal périodique LFO issu de l'oscillateur 322. Le compteur 802 fournit, en sortie, un signal binaire noté END_CNT. Le compteur 802 est par exemple adapté à commuter le signal END_CNT vers l'état haut au bout d'une durée égale à environ dix minutes.

Le compteur 804 est adapté à mémoriser un nombre d'erreurs de détection commises par le dispositif 100A pendant la durée fixée par le compteur 802 (dix minutes, dans cet exemple). En pratique, le compteur 804 est par exemple incrémenté d'une unité à chaque front montant du signal LPCD_FALSE_DET. En d'autres termes, le compteur 804 est adapté à mémoriser un nombre d'activations du mode 250 de confirmation (figure 3) n'ayant pas conduit à une sortie du mode de veille du dispositif 100A.

Le compteur 806 est adapté à comptabiliser un nombre de salves 200 (figure 3) d'émission de champ lors de la durée fixée par le compteur 802. En pratique, le compteur 806 est par exemple incrémenté d'une unité à chaque front montant du signal RF BURST de commande des salves 200 d'émission de champ.

De manière générale, le circuit 800 permet d'établir, à partir des informations mémorisées par les compteurs 804 et 806, un rapport ou ratio entre le nombre d'erreurs de détection commises par le dispositif 100A et le nombre de salves 200 d'émission de champ pendant la durée fixée par le premier compteur 802.

La figure 10 représente, sous forme de schéma-blocs, un autre mode de mise en œuvre d'un procédé d'ajustement de seuils de détection d'un dispositif NFC. Le procédé est par exemple mis en œuvre par le circuit 800 (figure 9) équipant le premier dispositif 100A (figure 1).

Selon ce mode de mise en œuvre, le dispositif 100A est, au cours d'une étape initiale (bloc 900, LPCD), configuré en mode de détection de carte et en veille. Depuis l'étape initiale 900, on teste (bloc 902, END_LFO_CNT?) si le signal END_CNT est à l'état haut, c'est-à-dire si la durée définie par le compteur 802 (figure 9) est écoulée.

Si le signal END_CNT est à l'état haut (sortie yes du bloc 902), on passe alors à une étape (bloc 904, WKUP / CPU IT) de sortie de veille. L'étape 904 de la figure 8 est par exemple analogue à l'étape 504 précédemment décrite en relation avec la figure 6. Depuis l'étape 904 de sortie de veille, on compare ensuite (bloc 906, TOO MUCH FALSE DET?) le nombre d'erreurs de détection, mémorisée par le compteur 804, par rapport à une première valeur, par exemple un seuil haut d'erreurs de détection.

Si le nombre d'erreurs de détection est supérieur à la première valeur (sortie yes du bloc 906), on passe ensuite à une autre étape (bloc 908, NFC_FW to increase MW and/or PW). L'étape 908 de la figure 10 est par exemple analogue à l'étape 708 précédemment décrite en relation avec la figure 8. En particulier, durant l'étape 908, la plage MW d'amplitudes et/ou la plage PW de phases est élargie.

En revanche, si le nombre d'erreurs de détection est inférieur à la première valeur (sortie no du bloc 906), on compare alors (bloc 910, NOT ENOUGH FALSE DET?) le nombre d'erreurs de détection par rapport à une deuxième valeur, par exemple un seuil bas d'erreurs de détection.

Si le nombre d'erreurs de détection est inférieur à la deuxième valeur, on passe alors à une étape (bloc 912, NFC_FW to decrease MW and/or PW). L'étape 912 est par exemple analogue à l'étape 908, à la différence près que, dans l'étape 912, la plage MW et/ou la plage PW est rétrécie au lieu d'être élargie.

En revanche, si le nombre d'erreurs de détection est supérieur à la deuxième valeur et inférieur à la première valeur (sortie no du bloc 910), on revient directement à l'étape initiale 900. En d'autres termes, tant que le nombre d'erreurs de détection est compris entre le seuil bas d'erreurs de détection et le seuil haut d'erreurs de détection, les plages MW d'amplitudes et PW de phases demeurent inchangées.

Le procédé exposé ci-dessus en relation avec la figure 10 présente des avantages semblables à ceux du procédé exposé en relation avec la figure 8. Un avantage supplémentaire du procédé exposé ci-dessus en relation avec la figure 10 tient au fait que l'on peut tirer profit du compteur 806 (figure 9) pour effectuer des estimations de consommation énergétique après chaque expiration de la durée fixée par le compteur 802 (figure 9). À titre d'exemple, on peut par exemple estimer la consommation du dispositif 100A à partir, notamment, du nombre d'activations du mode 250 de confirmation, mémorisée par le compteur 804 dans cet exemple, et du nombre de salves 806, mémorisée par le compteur 806 dans cet exemple, pendant la durée fixée par le compteur 802.

Dans la description qui précède, on a pris pour exemple des états respectivement haut et bas qui peuvent, en variante, être inversés en fonction des états de réinitialisation des différents circuits en adaptant le cas échéant certains signaux (par exemple, en prenant les sorties inversées des bascules). Une telle adaptation est à la portée de la personne du métier.

Selon un mode de réalisation, le dispositif 100A comporte une unité de traitement (un microprocesseur) et un produit programme d'ordinateur, comportant un support de stockage non transitoire comprenant des instructions adaptées à la mise en œuvre de tout ou partie des procédés exposés ci-dessus en relation avec les figures 6, 8 et 10.

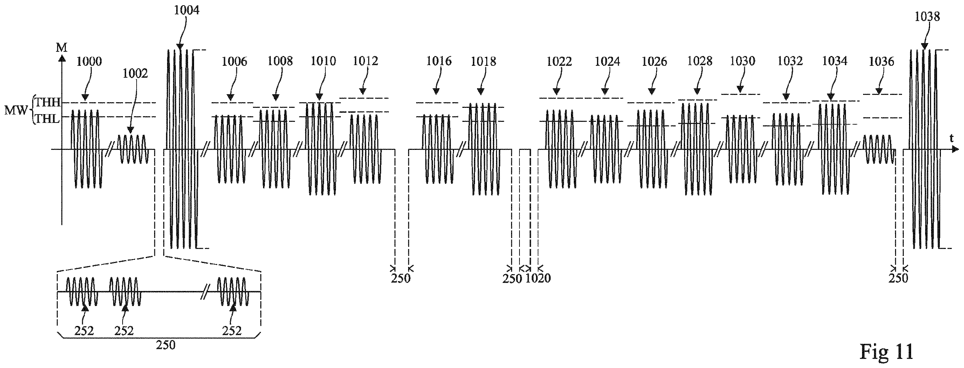

La figure 11 est un exemple de chronogramme illustrant la mise en œuvre des procédés décrits en relation avec les figures 6, 8 et 10. Le chronogramme de la figure 11 illustre plus particulièrement l'évolution, en fonction du temps t (en abscisse), de l'amplitude M (en ordonnée) des signaux aux bornes de l'antenne 302 (figure 4) du dispositif 100A (figure 1).

Dans l'exemple représenté, on suppose qu'une première salve 1000, analogue aux salves 200 de la figure 3 et dont l'amplitude est comprise dans la plage MW d'amplitudes, est émise par le dispositif 100A (figure 1) en mode veille.

On suppose ensuite que le dispositif NFC 100B (figure 1) est placé dans le champ du dispositif NFC 100A. Cela se traduit, dans cet exemple, par une baisse d'amplitude d'une salve 1002 postérieure à la salve 1000. La salve 1002 est, par exemple, semblable à la salve 200' de la figure 3. Dans l'exemple représenté, l'amplitude de la salve 1002 sort de la plage MW d'amplitudes. À l'issue de l'estimation de la valeur moyenne de l'amplitude des salves 252 du mode 250 de confirmation, on suppose que le dispositif émetteur 100A bascule en mode actif, c'est-à-dire qu'il est sorti de veille, et émet normalement (émission 1004).

Une fois l'émission 1004 achevée, le dispositif 100A est remis en mode veille et recommence à émettre des salves analogues aux salves 200 de la figure 3. Plus précisément, dans l'exemple représenté, le dispositif 100A émet d'autres salves successives 1006, 1008 et 1010, postérieures à l'émission 1004, dont les amplitudes sont toutes comprises dans la plage MW.

Selon un mode de mise en œuvre, au cours de salves périodiques d'émission de champ par le premier dispositif 100A, la plage MW d'amplitudes est décalée, sans modification d'étendue, en fonction de résultats obtenus au cours d'une ou de plusieurs salves précédentes. Le décalage de la plage MW est par exemple défini par des niveaux mesurés lors d'au moins une salve précédente en l'absence de détection du deuxième dispositif. Le décalage de la plage MW d'amplitudes est par exemple réalisé conformément à l'un des modes de mise en œuvre décrits dans le document EP 3495986.

Dans l'exemple représenté, au moment de l'émission de la salve 1008, la plage MW est décalée en fonction de l'amplitude de la salve 1006 précédente, par exemple centrée par rapport à l'amplitude de la salve 1006. De façon analogue, au moment de l'émission de la salve 1010, la plage MW est décalée en fonction de l'amplitude de la salve 1008 précédente, par exemple centrée par rapport à l'amplitude de la salve 1008.

On suppose ensuite qu'une perturbation survient durant l'émission d'encore une autre salve 1012, postérieure à la salve 1010, de sorte que l'amplitude de la salve 1012 sort de la plage MW d'amplitudes. À l'issue du mode 250 de confirmation, on suppose alors que le dispositif émetteur 100A est maintenu en mode veille et recommence à émettre des salves analogues aux salves 200 de la figure 3. En d'autres termes, on suppose que le dispositif 100A commet une première erreur de détection.

Dans l'exemple représenté, le dispositif 100A émet encore un autre salve 1016, postérieure au mode 250, dont l'amplitude est comprise dans la plage MW.

On suppose ensuite qu'une autre perturbation survient durant l'émission d'encore une autre salve 1018, postérieure à la salve 1016 et, par exemple, séparée de la salve 1016 par moins de trente-deux salves, de sorte que l'amplitude de la salve 1018 sort de la plage MW d'amplitudes. À l'issue du mode 250 de confirmation, on suppose là encore que le dispositif émetteur 100A est maintenu en mode veille et recommence à émettre des salves. En d'autres termes, on suppose que le dispositif 100A commet une deuxième erreur de détection.

La mise en œuvre des procédés décrits en relation avec les figures 6, 8 et 10 permet alors d'élargir la plage MW d'amplitudes, en raison d'un nombre d'erreurs de détection considéré comme trop grand dans cet exemple.

Dans l'exemple représenté, le dispositif 100A est sorti de veille au cours d'une étape 1020.

Le dispositif 100A est ensuite remis en mode veille et recommence à émettre des salves. Dans l'exemple représenté, le dispositif 100A émet d'autres salves successives 1022, 1024, 1026, 1028, 1030, 1032 et 1034, postérieures à la sortie 1020 du mode de veille, dont les amplitudes sont toutes comprises dans la plage MW.

Dans l'exemple représenté, la variation d'amplitude entre les salves 1028 et 1030, résultant par exemple d'encore une autre perturbation, est supposée semblable à la variation d'amplitude entre les salves 1010 et 1012. On constate néanmoins que, dans cet exemple, l'ajustement de la plage MW à l'issue de la sortie 1020 de veille permet au dispositif 100A de ne pas commettre de fausse détection lors de l'émission de la salve 1030, contrairement à ce qui s'était produit lors de l'émission de la salve 1012.

De façon analogue, dans l'exemple représenté, la variation d'amplitude entre les salves 1032 et 1034, résultant par exemple d'encore une autre perturbation, est supposée semblable à la variation d'amplitude entre les salves 1016 et 1018. On constate là encore que, dans cet exemple, l'ajustement de la plage MW permet au dispositif 100A de ne pas commettre de fausse détection lors de l'émission de la salve 1034, contrairement à ce qui s'était produit lors de l'émission de la salve 1018.

On suppose alors que le dispositif NFC 100B (figure 1) est placé dans le champ du dispositif NFC 100A. Cela se traduit, dans cet exemple, par une baisse d'amplitude d'une salve 1036, postérieure à la salve 1034. Dans l'exemple représenté, l'amplitude de la salve 1036 sort de la plage MW d'amplitudes. Au terme du mode 250 de confirmation, on suppose alors que le dispositif émetteur 100A est sorti de veille et émet normalement (émission 1038) pour communiquer avec le dispositif 100B. Une fois l'émission 1038 achevée, le dispositif 100A est remis en mode veille et recommence à émettre des salves (non représentées).

Un avantage des procédés exposés précédemment en relation avec les figures 6, 8 et 10 réside dans le fait que, par rapport notamment aux modes de mise en œuvre décrits par le document EP 3495986, la plage MW d'amplitudes peut être élargie pour éviter un trop grand nombre de fausses détections. Cela s'avère utile, en particulier, lorsque le dispositif 100A est placé dans un environnement fortement perturbé, où les variations d'amplitude entre des salves consécutives sont trop grandes pour pouvoir être compensées grâce aux procédés décrits par le document EP 3495986. Cela permet plus généralement au dispositif 100A de conserver une bonne sensibilité de détection d'autres dispositifs NFC sans pour autant être perturbé par l'environnement.

Bien que cela n'ait pas été représenté en figure 11, un autre avantage des procédés exposés en relation avec les figures 6, 8 et 10 tient au fait que, par rapport notamment aux modes de mise en œuvre décrits par le document EP 3495986, la plage MW d'amplitudes peut en outre être réduite pour augmenter la sensibilité de détection. Cela s'avère utile, en particulier, lorsque le dispositif 100A est placé dans un environnement peu perturbé, où les variations d'amplitude entre des salves consécutives sont très faibles.

On a décrit précédemment en relation avec la figure 11 un chronogramme dans lequel la mise en œuvre des procédés des figures 6, 8 et 10 est illustrée par rapport à un exemple de variations d'amplitude du signal émis par le dispositif 100A. Toutefois, la personne du métier est capable de transposer ce qui a été précédemment décrit à des variations de déphasage par rapport au signal émis par le dispositif 100A.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, la personne du métier est capable d'adapter les modes de réalisation et modes de mise en œuvre précédemment décrits à d'autres modes de réalisation et modes de mise en œuvre dans lesquels les niveaux des signaux binaires sont différents de ceux indiqués dans la présente description.

Enfin, la mise en œuvre pratique des modes de réalisation et variantes décrits est à la portée de la personne du métier à partir des indications fonctionnelles données ci-dessus. En particulier, les valeurs des compteurs 406, 602, 802, 804 et 806 peuvent être adaptées par la personne du métier en fonction de l'application visée.

## Revendications

1. Procédé dans lequel des seuils de détection (AMP_MIN, AMP_MAX, PHI_MIN, PHI_MAX), par un premier dispositif NFC (100A), d'un deuxième dispositif NFC (100B), sont ajustés (506 ; 708, 714 ; 908, 912) en fonction d'un nombre d'erreurs de détection à l'issue de plusieurs salves d'émission de champ.

2. Procédé selon la revendication 1, dans lequel le premier dispositif NFC (100A) entre dans un mode (250) de confirmation lorsqu'au moins l'un des seuils de détection (AMP_MIN, AMP_MAX, PHI_MIN, PHI_MAX) est franchi.

3. Procédé selon la revendication 1 ou 2, dans lequel les seuils correspondent à des premier (AMP_MIN, PHI_MIN) et deuxième (AMP_MAX, PHI_MAX) seuils délimitant une plage (MW, PW) de valeurs d'une grandeur (AMP, PHI) caractéristique d'un signal aux bornes d'un circuit oscillant (306) du premier dispositif (100A).

4. Procédé selon la revendication 3, dans lequel ladite grandeur correspond à une amplitude (AMP) du signal aux bornes du circuit oscillant (306) du premier dispositif (100A) .

5. Procédé selon la revendication 3, dans lequel ladite grandeur correspond à un déphasage (PHI) du signal aux bornes du circuit oscillant (306) du premier dispositif (100A).

6. Procédé selon l'une quelconque des revendications 3 à 5, dans lequel la plage (MW, PW) est élargie (506 ; 708 ; 908) lorsque le nombre d'erreurs de détection est supérieur à une première valeur.

7. Procédé selon l'une quelconque des revendications 3 à 6, dans lequel la plage (MW, PW) est rétrécie (714 ; 912) lorsque le nombre d'erreurs de détection est inférieur à une deuxième valeur.

8. Procédé selon l'une quelconque des revendications 3 à 7, dans lequel, au cours de salves périodiques d'émission de champ par le premier dispositif (100A), la plage (MW, PW) est décalée, sans modification d'étendue, en fonction de résultats obtenus au cours d'une ou de plusieurs salves précédentes.

9. Procédé selon la revendication 8, dans lequel le décalage de la plage (MW, PW) est défini par des niveaux mesurés lors d'au moins une salve précédente en l'absence de détection du deuxième dispositif (100B).

10. Procédé selon l'une quelconque des revendications 1 à 9, dans lequel le premier dispositif (100A) comporte au moins deux modes de fonctionnement, dont un premier mode dans lequel des salves de détection sont espacées d'une durée correspondant à au moins cent fois la durée des salves.

11. Procédé selon l'une quelconque des revendications 1 à 10, dans lequel le premier dispositif (100A) bascule dans un mode de fonctionnement d'émission d'une séquence d'interrogation telle que définie dans les spécifications du NFC Forum lorsque le deuxième dispositif (100B) est détecté à portée.

12. Produit programme d'ordinateur, comportant un support de stockage non transitoire comprenant des instructions adaptées à la mise en œuvre du procédé selon l'une quelconque des revendications 1 à 11.

13. Dispositif électronique (100A), comportant un produit programme d'ordinateur selon la revendication 12.

14. Circuit électronique (400 ; 600 ; 800), adapté à la mise en œuvre du procédé selon l'une quelconque des revendications 1 à 11.

15. Dispositif électronique (100A), comportant un circuit électronique (400 ; 600 ; 800) selon la revendication 14.
